Europäisches Patentamt

(19) European Patent Office

Office européen des brevets

(11) Publication number: **0 094 125**
**B1**

(12) # EUROPEAN PATENT SPECIFICATION

(45) Date of publication of patent specification: **16.09.87**

(51) Int. Cl.⁴: **G 02 B 6/38**

(21) Application number: **83200631.6**

(22) Date of filing: **03.05.83**

(54) Method and device for positioning light-conducting fibres.

(30) Priority: **12.05.82 NL 8201941**

(43) Date of publication of application:
**16.11.83 Bulletin 83/46**

(45) Publication of the grant of the patent:
**16.09.87 Bulletin 87/38**

(84) Designated Contracting States:
**DE FR GB SE**

(56) References cited:
**EP-A-0 030 617**
**US-A-4 161 656**
**US-A-4 307 296**

**PATENTS ABSTRACTS OF JAPAN, vol. 5, no. 32, 27th February 1981, page 141P50**

**PHILIPS TECHNICAL REVIEW, vol. 38, no. 6, 1978/1979, pages 158-159, Eindhoven, NL. A. J. J. FRANKEN et al.: "Experimental semi-automatic machine for hot splicing glass fibres for optical communication"**
**European Conference on Optical Communication, 1979, p. 6.1.1-6.1.4**

(73) Proprietor: **N.V. Philips' Gloeilampenfabrieken**
**Groenewoudseweg 1**
**NL-5621 BA Eindhoven (NL)**

(72) Inventor: **Khoe, Giok Djan**
**c/o INT. OCTROOIBUREAU B.V. Prof. Holstlaan 6**
**NL-5656 AA Eindhoven (NL)**

(74) Representative: **Veenstra, Gustaaf et al**
**INTERNATIONAAL OCTROOIBUREAU B.V. Prof. Holstlaan 6**
**NL-5656 AA Eindhoven (NL)**

## Description

The invention relates to a method of positioning a light-conducting fibre under visual control. The invention also relates to an arrangement comprising a positioning device for positioning light-conducting fibres under visual control.

An example of the use of a method and a device of the kind mentioned in the opening paragraph is the positioning of the ends of two light-conducting fibres with respect to each other and with respect to a heat source in order to permit of welding these fibres to each other. An example thereof has been described in I.E.E.E. Journal of Quantum Electronics, Vol. QE—14, no. 8 (August 1978), pp. 614—619. Since the light conduction in light-conducting fibres takes place through the core, the orientation of the core is of importance during positioning. In known welding apparatus, however, it is common practice to illuminate the cladding of the fibres and to observe it by means of, for example, a microscope or a projection system. When the core is arranged eccentrically to the outer circumference of the cladding, this gives rise to positioning errors, which especially in monomode light-conducting fibres may lead to unacceptably large light losses in the weld.

This disadvantage can be avoided in that the end of the first fibre remote from the weld is illuminated and the quantity of light emanating at the end of the second fibre remote from the weld is measured. When this quantity of light is at a maximum, the cores of the fibres at the area of the weld are positioned correctly.

A further method, in which the light conducted through the core and emanating at an end of the fibre is observed, can be used when an end of a light-conducting fibre has to be mounted in an envelope, the surface of which will serve later on as a reference surface for automatically bringing the core of the fibre to the desired position in, for example, an optical connector. An example thereof has been described in the US—PS no. 4,289,374. A similar method can also be used when a fibre end in a plug part of a coupling has to be arranged in the correct position with respect to a lens, as has been described in the Dutch Patent Application no. 79 05 610 (PHN 9537) laid open for public inspection. However, all these methods have the practical disadvantage that, in order to introduce the light into the core, the other end of the glass fibre, which has a length often in the order of kilometres, has to be illuminated.

The invention has for its object to provide a method of positioning light-conducting fibres, in which in a simple and easy manner the core of the fibre can be observed for the visual control. The method according to the invention is therefore characterized in that the fibre to be positioned is locally and transversely irradiated with ultraviolet light having such a wavelength that fluorescence is produced within the core of the fibre and in that the visual light produced in the core by the fluorescence is observed and used for the visual control.

It should be noted that it is known *per se* from the US—PS no. 4,307,296 to visualize the core of a light-conducting fibre by irradiation with ultraviolet light for measuring the diameter thereof.

A modification of the method according to the invention, which is particularly suitable for observation of the light emanating from the core at an end of the fibre, without the necessity of illuminating the other end, is characterized in that the light-conducting fibre is irradiated at a certain distance from a first end of the fibre, for which purpose the fibre, before being irradiated, is freed from an opaque coating at the area to be irradiated, and in that the visible light emanating at the first end of the fibre is observed directly or through a further light-conducting fibre for the visual control.

The device according to the invention is characterized in that it comprises an ultraviolet light source for locally and transversely irradiating a fibre to be positioned, this light source being designed to emit ultraviolet light of a wavelength which produces observable fluorescence in the core of the fibre.

The invention will now be described more fully with reference to the drawing. In the drawing:

Fig. 1 is a schematic representation of a part of a welding apparatus designed for use in a first embodiment of the method according to the invention;

Fig. 2 shows an image of two relatively positioned light-conducting fibres, and

Fig. 3 is a schematic representation of a part of a device for treating an envelope at an end of a light-conducting fibre designed for use in a second embodiment of the method according to the invention.

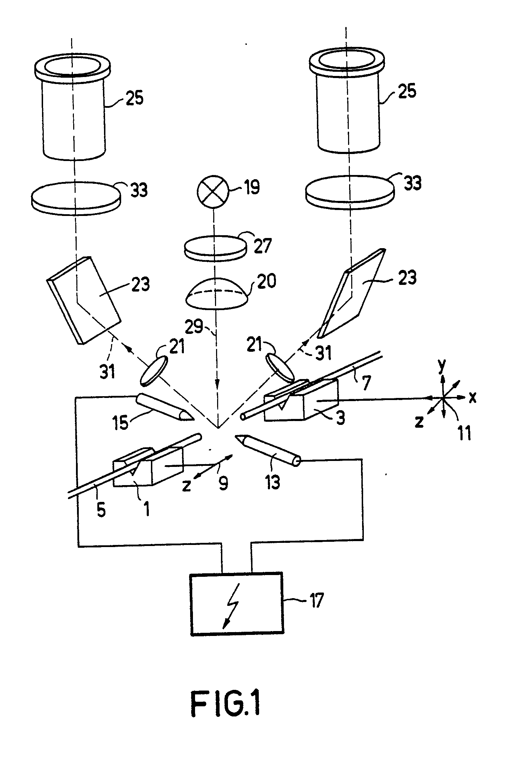

The welding apparatus shown diagrammatically in Fig. 1 comprises a number of parts known *per se*, of, for example the aforementioned publication in I.E.E.E. Journal of Quantum Electronics, Vol. QE—14 no. 8 (August 1978), pp. 614—619 or German Auslegeschrift no. 2,633,572. Among these parts are two blocks 1, 3 with V-shaped grooves, each of which can accommodate a light-conducting fibre 5 and 7, respectively. The first block 1 is connected to a micromanipulator 9, by means of which the block can be displaced in a direction towards or way from the other block 3 (the z-direction). The other block 3 is connected to a micromanipulator 11, by means of which this block can be displaced in three orthogonal directions denoted by x, y and z. The micromanipulators known *per se* are shown only diagrammatically in the figures for the sake of simplicity.

In the proximity of the area at which the ends of the light-conducting fibres 5, 7 provided in the blocks 1, 3 are located, there is arranged a heat source, which in the embodiment shown comprises two electrodes 13, 15 which are connected to a controllable high-voltage generator 17. Between these electrodes, an arc discharge can be produced, which supplies the heat for welding together the ends of the two light-conducting glass fibres 5, 7. Of course, also other heat sources may be used, for example, a laser, as described in Applied Optics, Vol. 18, no. 19 (1979—10—01), pp. 3256—3259).

The light-conducting fibres 5, 7 are positioned with respect to each other and with respect to the heat source by means of the micromanipulators 9, 11 under visual control. For this purpose, the welding apparatus is provided with an optical system comprising a light source 19 with a condensor lens 20 and an imaging system which in this embodiment is constituted by a binocular microscope with two objectives 21, two mirrors 23 and two oculars 25. Other imaging systems may also be used, for example, a projection system, as described in "Philips Technical Reveiw" 38, no. 6 (1978/1979), pp, 158—159.

In the welding apparatus used hitherto, the light source 19 emits visible light and the claddings of the light-conducting fibres 5, 7 are observed by means of the imaging system. When it is of importance that the cores of the fibres 5, 7 are positioned accurately in line with each other, which is the case, for example, when the fibres are so-called monomode fibres, this method is less satisfactory. Monomode fibres have a core with a very small diameter (for example, smaller than 10 μm) so that the cores can be relatively offset through a comparatively large distance when the cores are arranged a few μm eccentrically to the outer circumference of the claddings. Thus, it is of importance to observe during positioning not the cladding, but the core. For this purpose, according to the invention, the light source 19 is designed to emit ultraviolet light. As has been described, for example, in the aforementioned US—PS no. 4,307,296, the core of a light conducting fibre comprises substances, for example, germanium compounds, which fluoresce when they are irradiated with ultraviolet light, which property can be used to discern the core.

The light source 19 generally produces besides ultraviolet light also visible light, which in this case is annoying because it would illuminate the claddings of the fibres 5, 7, as a result of which the visibility of the fluorescent core would be reduced. In order to avoid this, the light source 19 is provided with a low-pass filter 27, which, for example, transmits only light the wavelength of which is smaller than 400 nm. The fibres 5, 7 are then not irradiated by visible light and their non-fluorescent claddings remain substantially invisible. The beam of ultraviolet light originating from the light source 19 is designated in Fig. 1 by reference numeral 29.

The cores of the fibres 5, 7 emit visible light as a result of the fluorescence, two beams 31 of this light being passed through the objectives 21 and the mirrors 23 to the oculars 25. In order to protect the observer from ultraviolet light, there are arranged in the paths of the beams 31 high-pass filters 33, which, for example, pass only light having a wavelength larger than 400 nm.

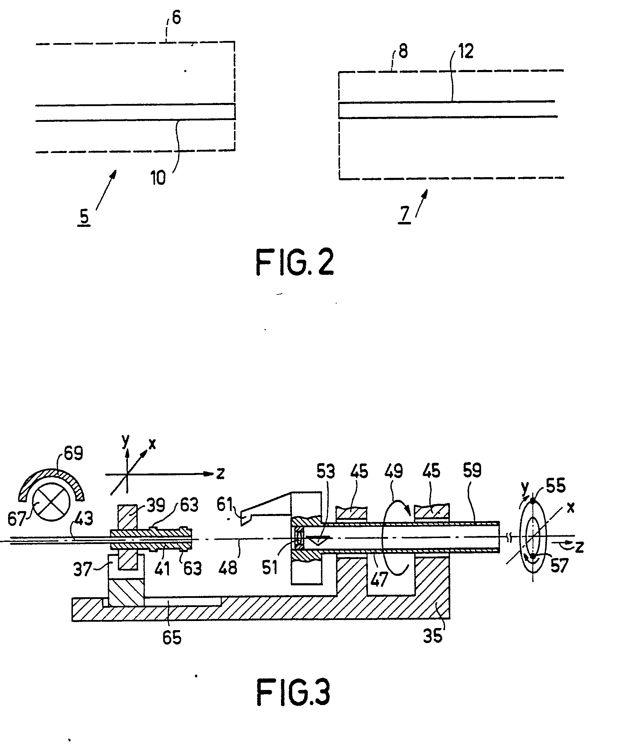

With the device described, it is possible to arrange the cores of the light-conducting fibres 5, 7 accurately in line with each other, after which the two fibres are fused together. Fig. 2 gives an impression of the image that can be seen after the positioning and just before the connection is established. The claddings 6 and 8 of the fibres 5 and 7 are not or are hardly visible and are indicated in the Figure by dotted lines. The cores 10 and 12 indicated by full lines can be observed clearly. It also appears from the Figure that the cores 10, 12 are (or may be) arranged eccentrically to the claddings 6, 8 so that it is very desirable for the cores themselves to be positioned accurately. The weld then formed results only in a very small loss of light.

The device shown diagrammatically in Fig. 3 for machining an envelope at an end of a light-conducting fibre comprises a supporting frame 35 with a micromanipulator 37, on which is provided a support 39 for securing an end of a monomode light-conducting fibre 43 provided with an envelope 41, and with supporting members 45 in which a tubular housing 47 is arranged so as to be rotatable about an axis of rotation 48, as is indicated by an arrow 49. The housing 47 accommodates an objective 51 and a reversing prism 53 arranged eccentrically to the axis of rotation 48, the optical axis of the objective substantially coinciding with the major side face of the prism. The rectangular side faces on the minor sides of the prism 53 are directed at right angles to the plane passing through the axis of rotation 48 and the optical axis of the objective 51.

A part of the light emanating from the righthand end of the fibre 43 only passes through the objective 51, whilst the remaining part passes both through the objective 51 and through the reversing prism 53. The two parts (of the light) will each produce a luminous spot 55 and 57, respectively, which can be observed at the righthand end 59 of the housing 47. Due to the presence of the reversing prism 53, a displacement of the fibre end in the x- or y-direction will result in a displacement of the luminous spots 55 and 57 also in the x- or y-direction, but in relatively opposite directions. Due to the fact that the housing 47 rotates with the objective 51 and the reversing prism 53, both luminous spots will produce a circular image because the objective and the reversing prism are arranged eccentrically to the axis of observation and rotation 48. The circular images will be concentric only if the end of the fibre 43 is located on the axis of observation and rotation 48.

If the end of the core of the fibre 43 is not located on the axis of observation and rotation 48, the images are eccentric. If the fibre end is displaced, the images will move in relatively opposite directions. As a result, it is possible to position the light-conducting core of the fibre end rapidly and accurately on the axis 48 by means of the micromanipulator 37. When the core of the fibre end has been positioned on the axis 48, by a translation of the micromanipulator 37 with the support 39 along the axis 48, mounting edges 63 of the envelope 41 are machined by a turning-chisel 61 so that each mounting edge is provided with an outer surface concentric with the light-conducting core of the fibre end. The supporting frame 35 is provided with a slot 65 to permit the movement of the micromanipulator 37.

So far the device is well known from the above-mentioned US—PS no. 4,289,374. In the known device, the light had to be radiated into the core from the other end of the fibre 43 (not shown in Fig. 2). In many cases, this is less practical. Therefore, the known device is improved by the addition of an ultraviolet light source 67 with a reflector 69. This light source is arranged so that it can locally and transversely irradiate the fibre 43 at a certain distance (for example, 5 cm) from the righthand end. In order to make it possible for the ultraviolet light to reach the core, an opaque coating present on the fibre should be removed beforehand at the area to be irradiated. As a result of the radiated ultraviolet light, the core is caused to fluoresce and the major part of the visible light thus produced is passed through the core in both directions. A part of this light reaches the righthand end of the fibre 43 and produces in the manner described above the luminous spots 55 and 57.

Two examples of the use of the method according to the invention have been described above. It will be clear, however, that the method may be used in all cases in which light-conducting fibres have to be positioned under visual control, as, for example, in the process of mounting a fibre end in a plug part (of, the Dutch Patent Application no. 79 05 610). The method of producing visible light by transverse radiation of ultraviolet light into the core, as described with reference to Fig. 5, may further also be used in a welding apparatus. For this purpose, in the welding apparatus shown in Fig. 1, the optical system could be replaced by an ultraviolet source at a certain distance from the end of the first fibre 5 corresponding to the light source 67 of Fig. 3. A light detection device may then be arranged at the end of the second fibre 7 remote from the welding area.

If desired, the light detection device may also be arranged near the end of the fibre 7 facing the welding area. In this case, the light detection device should be designed so that the fibre projects from the device on both sides and a part of the light conducted through the fibre is absorbed by the device. Such a light detection device may comprise, for example, a glass rod provided with a groove and having a light detector at one of its ends, as described in Paper THAA 2 on page 44 of the Digest Topical Meeting on Optical Fibre Communication, April 13—15, 1982, Phoenix, Arizona, U.S.A. (OFC 82). When the light-detection device receives a maximum light signal, the ends of the two fibres 5, 7 are positioned correctly with respect to each other at the welding area.

### Claims

1. A method of positioning a light-conducting fibre under visual control, characterized in that the fibre to be positioned (5, 7, 43) is locally and transversely irradiated with ultraviolet light of such a wavelength that fluorescence is produced within the core (10, 12) of the fibre (5, 7) and in that the visible light produced in the core by the fluorescence is observed and used for the visual control.

2. A method as claimed in Claim 1, characterized in that the light-conducting fibre (43) is irradiated at a certain distance from a first end of the fibre, for which purpose the fibre, before being irradiated, is freed from an opaque coating at the area to be irradiated, and in that the visible light emanating at the first end of the fibre is observed directly or through a further light-conducting fibre for the visual control.

3. An arrangement comprising a positioning device for positioning light-conducting fibres (5, 7, 43) under visual control, characterized in that the arrangement comprises an ultraviolet light source (19, 67) for locally and transversely irradiating a fibre to be positioned (5, 7, 43), this light source being designed to emit ultraviolet light of a wavelength which produces observable fluorescence in the core (10, 12) of the fibre.

4. An arrangement as claimed in Claim 3 comprising a welding apparatus for joining together light-conducting fibres (5, 7) consisting of a heat source (13, 15) and in which said positioning device constitutes a manipulator (9, 11) for positioning the ends of at least two light-conducting fibres with respect to each other and with respect to the heat source the arrangement further comprising an optical system with said ultraviolet light source (19) for carrying out the visual control, characterized in that the ultraviolet light source (19) is provided with a low-pass filter (27) and in that the optical system also comprises an imaging system provided with a high-pass filter (33).

### Patentansprüche

1. Verfahren zum Positionieren einer Lichtleitfaser unter visueller Aufsicht, dadurch gekennzeichnet, dass die zu positionierende Faser (5, 7, 43) stellenweise und in Querrichtung mit ultraviolettem Licht mit einer derartigen Wellenlänge angestrahlt wird, dass im Kern (10, 12) der Faser (5, 7) Fluoreszenz ausgelöst wird, und dass das im Kern durch die Fluoreszenz erzeugte sichtbare Licht wahrgenommen und für die visuelle Aufsicht verwendet wird.

2. Verfahren nach Anspruch 1, dadurch gekennzeichnet, dass die Lichtleitfaser (43) in einer bestimmten Entfernung von einem ersten Ende der Faser angestrahlt wird, wozu vor dem Anstrahlen eine lichtundurchlässige Beschichtung von dem anzustrahlenden Gebiet auf der Faser entfernt wird, und dass das aus dem ersten Faserende austretende sichtbare Licht direkt oder durch eine weitere Lichtleitfaser für die visuelle Aufsicht wahrgenommen ist.

3. Vorrichtung mit einer Positioniereinrichtung zum Positionieren von Lichtleitfasern (5, 7, 43) unter visueller Aufsicht, dadurch gekennzeichnet, dass die Anordnung eine Ultraviolettlichtquelle (19, 67) zum stellenweise und quer gerichteten Anstrahlen einer zu positionierenden Faser (5, 7, 43) enthält, wobei diese Lichtquelle zum Ausstrahlen vom ultraviolettem Licht mit einer Wellenlänge ausgelegt ist, das wahrnehmbare Fluoreszenz im Kern (10, 12) der Faser erzeugt.

4. Vorrichtung nach Anspruch 3, mit einem Schweissgerät zum Zusammenschweissen von Lichtleitfasern (5, 7), das eine Wärmequelle (13, 15) enthält, und in dem die Positionierungseinrichtung einen Manipulator (9, 11) zum Positionieren der Enden von zumindest zwei Lichtleitfasern in bezug aufeinander und in bezug auf die Wärmequelle darstellt, wobei die Anordnung weiter ein optisches System mit der Ultraviolettlichtquelle (19) zur Durchführung der visuellen Aufsicht enthält, dadurch gekennzeichnet, dass die Ultraviolettlichtquelle (19) mit einem Tiefpassfilter (27) versehen ist, und dass das optische System weiter ein Abbildungssystem mit einem Hochpassfilter (33) enthält.

**Revendications**

1. Procédé de positionnement d'une fibre optique sous contrôle visuel, caractérisé en ce que la fibre optique devant être positionnée (5, 7, 43) est éclairée localement et transversalement par de la lumière ultraviolette ayant une longueur d'onde telle qu'une fluorescence est provoquée à l'intérieur du coeur (10, 12) de la fibre (5, 7) et en ce que la lumière visible engendrée dans le coeur par la fluorescence est observée et utilisée pour le contrôle visuel.

2. Procédé selon la revendication 1, caractérisé en ce que la fibre optique (43) est éclairée à une certaine distance d'une première extrémité de la fibre, moyennant quoi la fibre, avant son éclairage, est dépourvu d'un revêtement opaque à l'endroit devant être éclaire, et en ce que la lumière visible sortant de la première extrémité de la fibre est observée directement ou à travers une autre fibre optique pour le contrôle visuel.

3. Dispositif comportant un dispositif (5, 7, 43) de positionnement des fibres optiques sous contrôle visuel, caractérisé en ce qu'il comporte une source lumineuse ultraviolette (19, 67) pour éclairer localement et transversalement une fibre devant être positionnée (5, 7, 43), cette source lumineuse étant conçue pour émettre de la lumière ultraviolette d'une longueur d'onde provoquant une fluorescence observable dans le coeur (10, 12) de la fibre.

4. Dispositif selon la revendication 3, comportant une soudeuse servant à joindre deux fibres optiques 5, 7 et constituée par une source de chaleur (13, 15), dispositif dans lequel ledit dispositif de positionnement constitue un manipulateur (9, 11) pour positionner les extrémités d'au moins deux fibres optiques l'une par rapport à l'autre et par rapport à la source de chaleur et qui comporte en outre un système optique muni de ladite source lumineuse ultraviolette (19) pour permettre d'effectuer le contrôle visuel, caractérisé en ce que la source lumineuse ultraviolette (19) est munie d'un filtre passe-bas (27) et en ce que le système optique comporte également un système de formation d'images muni d'un filtre passe-haut (33).

FIG.1

FIG.2

FIG.3